# EUROPEAN PATENT APPLICATION

(11) **EP 2 654 375 A2**
(43) Date of publication of application: **23.10.2013**
(21) Application number: 12196506.5
(22) Date of filing: 11.12.2012
(51) Int. Cl.: H05B 33/08, H05B 37/02

(54) **Illumination system**

(30) Priority: 17.04.2012 TW 101113639
(71) Applicant: Lextar Electronics Corp., 30075 Hsinchu (TW)
(72) Inventor: Wu, En-Min, 112 Taipei City (TW)
(74) Representative: Liedtke, Markus

(57) **Abstract**

An illumination system includes a light module, a power module, a driver module, a light sensor module, and a control module. The power module is coupled to an input power source. The power module converts the input power source and outputs a direct voltage. The driver module, coupled between the light module and the power module, converts the direct voltage into a driving voltage and then outputs a driving current to drive the light module. The light sensor module senses an environment brightness and outputs a brightness signal. The control module receives the brightness signal and outputs a light modulation signal to the driver module, wherein the driver module controls the activation time of the light module according to the light modulation signal.

## Description

### BACKGROUND OF THE INVENTION

### 1. Field of the Invention

The present invention generally relates to an illumination system. Particularly, the present invention relates to an illumination system with adjustable brightness levels.

### 2. Description of the Prior Art

Current illumination systems, such as table lamps, are widely used lamp products. As demand and requirements by lamp users increase along with increasing competition between manufacturers on the market, lamp manufacturers have gradually started to push out even more user friendly lamp products in order to satiate users' needs and requirements. As such, whether an illumination system is user friendly or not has become a key factor in the determination of the competitiveness of a product with other related products.

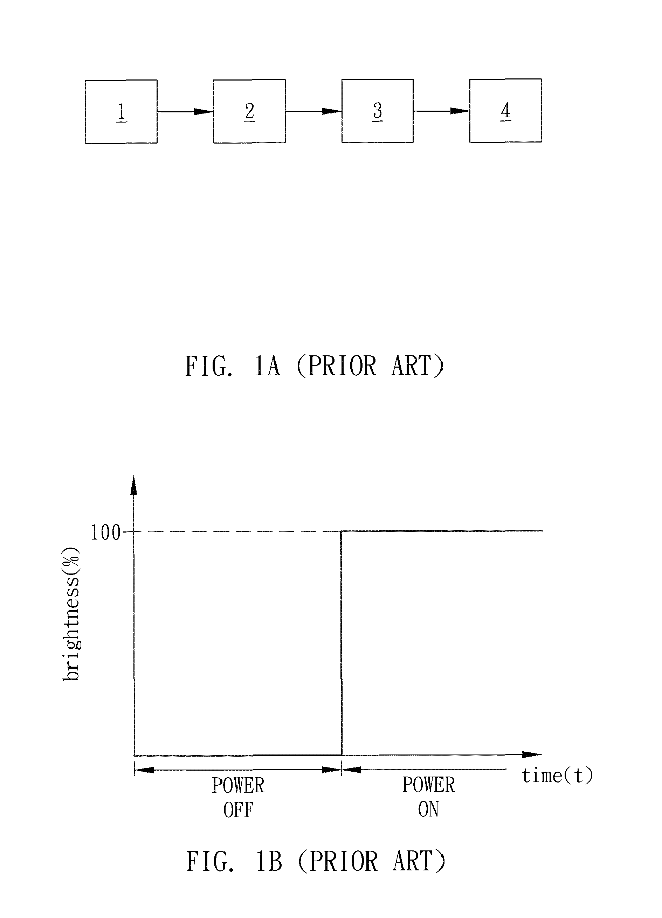

FIG. 1A illustrates a diagram of an electrical circuit of a conventional illumination system. As shown in FIG. 1A, the conventional illumination system includes a power source 1, a lamp switch 2, a driver circuit 3, and a lamp 4. When the lamp switch 2 is configured in the closed state, the driver circuit 3 can receive voltage from the power source 1 to drive the lamp 4 to produce light. However, current lamp products on the market all have a common shortcoming in that they may only be configured to be full brightness or full darkness states. As shown in FIG. 1B, when the conventional illumination system is in the power off state, the lamp brightness is 0%. When the conventional illumination system is in the power on state, the lamp brightness is 100%. In other words, most of the lamp products on the market can only switch between states of full brightness or full darkness.

When users activate the conventional illumination system under low environment brightness circumstances, the lamp 4 of the illumination system will instantaneously produce light of the greatest brightness levels. Under these circumstances, since the users' eyes are accustomed to the dark environment already, the sudden bright light will be glaring for users. As a result, users will experience unnecessary discomfort.

In addition, there are a few illumination systems having soft start designs that can delay a bit of time to avoid instantaneously outputting 100% light. Although this type of design may overcome the deficiency of the mentioned lamp 4, it would still have the problem of activating too slow if the lamp were to be turned on under bright environment light circumstances. Therefore, the present invention provides a better illumination system to solve the above mentioned problems.

### SUMMARY OF THE INVENTION

It is an object of the present invention to provide a brightness adjustable illumination system that has better brightness adjusting effects.

The present invention provides an illumination system that includes a light source module, a power module, a driver module, a light sensor module, and a control module. The power module is coupled to an input power source, wherein the power module converts and outputs a direct voltage from the input power source. The driver module is coupled between the light source and the power module, wherein the driver module is a direct current to direct current convertor that receives and converts the direct voltage form the power module into a driving voltage and outputs a driving current to drive the light source module. The light sensor module senses an environment brightness and outputs an environment brightness signal. The control module is coupled respectively to the power module, the light sensor module, and the driver module. The control module outputs a light modulation signal to the driver module after receiving the environment brightness signal, and the driver module controls an activation time of the light source module according to the light modulation signal, wherein the activation time is the time required for the driving voltage to reach an operating voltage.

In a preferred embodiment, the light modulation signal is a pulse-width modulation signal. The driver module generates according to the pulse-width modulation signal the driving voltage having the corresponding amplitude. When the environment brightness signal is lower than a default lowest brightness threshold, the control module slows down a duty cycle of the pulse-width modulation signal so that the activation time slows down. When the environment brightness signal is higher than a default highest brightness threshold, the control module speeds up the duty cycle of the pulse-width modulation signal so that the activation time speeds up.

In another preferred embodiment, the light modulation signal is a direct current voltage level signal to provide the driver module to generate according to the direct current voltage level signal the driving voltage having corresponding amplitude. When the environment brightness signal is lower than a default lowest brightness threshold, the control module slows down the speed of voltage increase of the direct current voltage level signal such that the speed at which the driving voltage increases to the operating voltage slows down. When the environment brightness signal is higher than a default highest brightness threshold, the control module speeds up the speed of voltage increase of the direct current voltage level signal such that the speed at which the driving voltage increases to the operating voltage speeds up.

### BRIEF DESCRIPTION OF THE DRAWINGS

FIG. 1A is a view of a circuit of the conventional lamp device;
FIG. 1B is a graph of the relationship between output brightness and time of the conventional lamp;
FIG. 2A is a view of a circuit of the illumination system of the present invention;
FIG. 2B is a graph of the relationship between output brightness and time of the illumination system of the present invention; and
FIG. 3 is view of another embodiment of FIG. 2A.

### DETAILED DESCRIPTION OF THE PREFERRED EMBODIMENT

An illumination system is provided that can control the activation time thereof by sensing the environment brightness.

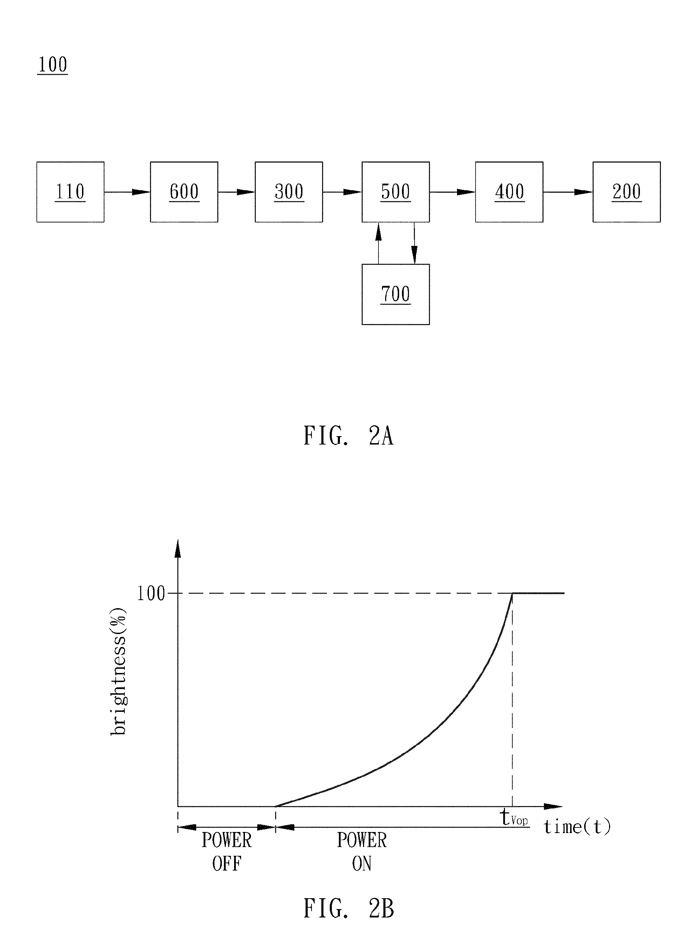

Referring to FIG. 2A of a preferred embodiment of the illumination system 100 of the present invention. The illumination system 100 includes a light source module 200, a power module 300, a driver module 400, a control module 500, and a light sensor module 700. As shown in FIG. 2A, the power module 300 is coupled to the control module 500. The control module 500 is respectively connected to the light sensor module 700 and the driver module 400. The light source module 200 in turn is connected to the driver module 400. In the present embodiment, the light source module 200 is preferably a light-emitting diode (LED) module. It should be noted that the light source module 200 of the illumination system 100 is not limited to being a single LED lamp. The light source module 200 may also be implemented as an incandescent light bulb, fluorescent light tube, and/or any other types of lights. In addition, the light source module 200 may also be a plurality of components that can generate light. As well, the form that the light source takes may change according to design requirements or a change in location. For instance, when the illumination system 100 is installed in an office building, the light source module 200 may be the light source of an entire floor or a particular office space.

As shown in FIG. 2A, the light source module 200 is driven by the driver module 400, while the control module 500 is used to control the driver module 400. The light sensor module 700 is coupled to the control module and is used to generate and output an environment brightness signal to the control module 500 so that the control module 500 can according to the environment brightness signal decide how to control the driver module 400. In other words, the light sensor module 700 senses an environment brightness (such as the brightness in an office space) and then transmits the environment brightness signal to the control module 500.

FIG. 2B illustrates a preferred embodiment of the relationship between brightness and time of the light source module 200 of the illumination system 100 when the power is activated. As shown in FIG. 2B, when the input power source is turned off (open circuit), the lamp brightness of the light source module 200 is 0%. When the input power source is turned on (closed circuit), the lamp brightness of the light source module 200 will gradually increase to at most 100% as time passes. Through the combination of the light sensor module 700, control module 500, and the driver module 400, the illumination system 100 can enable the control module 500 to determine an inclination and shape of the lamp brightness to time relational graph in accordance to the environment brightness signal transmitted from the light sensor module 200. In other words, the control module 500 can according to the environment brightness signal of the light sensor module 700 adjust how the driver module 400 drives the light source module 200 to generate light brightness. In this manner, the light brightness of the light source module 200 may light up in a more user friendly manner so as to prevent discomfort experienced by users due to over stimulation from exposure to sudden bright light of the light source module 200.

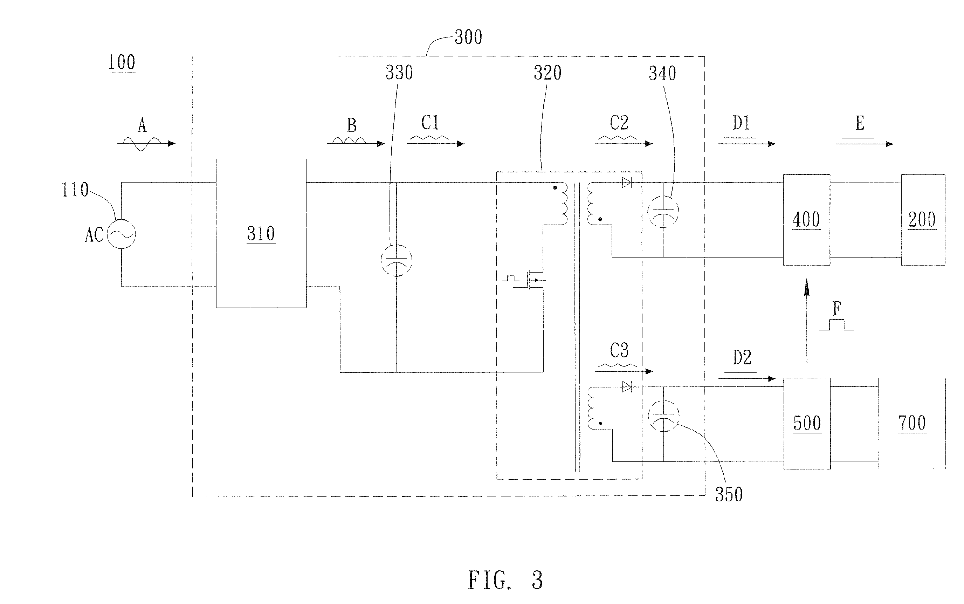

FIG. 3 illustrates another embodiment of FIG. 2A. As shown in FIG. 3, the power module 300 further includes a rectifier module 310, a voltage increase/decrease module 320, a primary filter element 330, and secondary filter elements 340 and 350, wherein the rectifier module 310 is electrically coupled to an input power source 110. In the present embodiment, the input power source 110 is preferably an alternating current (AC) source. When the rectifier module 310 receives high voltage AC wave A (ex. 110V or 220V) provided by the input power source 110, the rectifier module 310 will convert the high voltage AC wave A into a plurality of positive full wave voltage B. In other words, the rectifier module 310 of the present embodiment is a full wave rectifier or any other electronic element having a bridge circuit to transform bidirectional AC voltage to unidirectional direct current (DC) voltage.

The primary filter element 330 receives the full wave voltage B generated by the rectifier module 310, and conducts initial wave filtering on the full wave voltage B before outputting a primary voltage C1. The primary voltage C1 of the present embodiment has AC voltage with ripples. The voltage increase/decrease module 320 of the present embodiment is a transformer to accept the primary voltage C1 outputted from the primary filter element 330 and to generate a secondary main voltage of lower or higher voltage.

The secondary filter element 340 shown in FIG. 3 will upon receiving the secondary main voltage C2 from the voltage increase/decrease module 320 further filter the ripple and frequency components in the secondary main voltage C2 in order to output a DC voltage D1 to the driver module 400. Upon receiving a secondary supplemental voltage C3 from the voltage increase/decrease module 320, the secondary filter element 350 will further filter the ripple and frequency components in the secondary supplemental voltage C3 in order to output a DC voltage D2 to the control module 500. In the present embodiment, the secondary filter elements 340 and 350 essentially receive at the same time from the voltage increase/decrease module 320 similar AC voltages. In other words, the output of the voltage increase/decrease module 320 includes the secondary main voltage C2 and the secondary supplemental voltage C3, wherein they respectively provide the required voltage for the driver module 400 and the control module 500. In addition, the secondary filter element 340 and the secondary filter element 350 of the present embodiment similarly are capacitor elements. However, in other different embodiments, the secondary filter elements 340 and 350 can at the same time or not at the same time receive from the voltage increase/decrease module 320 different AC voltages. In other words, although the secondary main voltage C2 and the secondary supplemental voltage C3 similarly are DC voltages with ripples, their voltage levels are not limited to being the same levels (i.e. the voltage levels may be different). For instance, the voltage level of the secondary main voltage C2 outputted by the voltage increase/decrease module 320 may be lower, higher, or the same as the voltage level of the secondary supplemental voltage C3.

As shown in FIG. 3, the driver module 400 and the control module 500 essentially will respectively receive at the same time from the power module 300 the DC voltage D1 and the DC voltage D2. After the control module 500 receives the DC voltage D2, the control module 500 will activate the light sensor module 700, wherein the light sensor module 700 then senses the environment brightness levels and transmits an environment brightness signal for the control module 500 to receive. In the present embodiment, the control module 500 is preferably a microcontroller. The control module 500 generates and transmits a light modulation signal F to the driver module 400 according to the environment brightness signal. After accepting the DC voltage D1, the driver module 400 controls the activation time of the light source module 200 according to the light modulation signal F. In the present embodiment, the driver module 400 is a DC-to-DC convertor to convert the DC voltage D1 received from the power module 300 into a driving voltage E, wherein a driving (electrical) current is then outputted to drive the light source module 200. In more concrete terms, when the driving current drives the light source module 200, the driver module 400 controls the activation time of the light source module 200 through adjusting the driving voltage E, wherein the activation time of the light source module 200 is preferably the required time for the driving voltage E to reach an operating voltage (Vop). For instance, as shown in the brightness curve diagram of FIG. 2B, the activation time of the light source module 200 is the required time for the driving voltage E to reach the operating voltage between the time that the illumination system 100 is powered on to when the lamp brightness of the light source module 200 reaches 100% at time t_{Vop}.

As shown in FIG. 3, in a preferred embodiment, the light modulation signal F is a pulse-width modulation signal and the driver module 400 is a pulse-width modulation driver that generates and outputs according to the received pulse-width modulation signal the driving voltage E with corresponding DC voltage. In the present embodiment, when the control module 500 receives the environment brightness signal that is lower than a default lowest brightness threshold, the control module 500 will slow down a duty cycle of the light modulation signal (i.e. pulse-width modulation signal) so that the activation time of the light source module 200 slows down (increases). When the environment brightness signal is higher than a default highest brightness threshold, the control module 500 will speed up the duty cycle of the light modulation signal (pulse-width modulation signal) so that the activation time of the light source 200 speeds up (decreases). In the present embodiment, the default values of the lowest brightness threshold and the highest brightness threshold are either default settings preprogrammed or built-in, or are default settings set by users, wherein the lowest brightness threshold is preferably lower than the highest brightness threshold.

When users activate the illumination system 100 (i.e. the illumination system is in a closed state), the light sensor module 700 will first sense the environment's brightness levels and then transmit the environment brightness signal to the control module 500, wherein the control module 500 has the default settings of the lowest brightness threshold and the highest brightness threshold. According to the above mentioned, users may set the highest and lowest brightness thresholds through different methods such as updating the firmware of the control module 500. If the user activates or turns on the illumination system 100 when the environment brightness is low (ex. night time, within a dark room, etc), the environment brightness signal will be lower than the default lowest brightness threshold. In this instance, the control module 500 will slow down the duty cycle of the light modulation signal F (pulse-width modulation signal), which will make the driver module 400 generate the corresponding driving voltage E so that the activation time of the light source module 200 slows down. The result of this is that the light source module 200 will not instantaneously output the highest brightness, but rather will delay the time by gradually increasing the brightness until the brightest output is reached. In this manner, users accustomed to the low brightness environment to have suitable time to get accustomed as the light gradually increases in brightness. Conversely, when users activate or turn on the illumination system 100 when the environment brightness is high, the environment brightness signal the control module 500 receives will be higher than the highest brightness threshold. In this instance, since users are already quite accustomed to the relatively brighter environment (in other words, no time is required for users' eyes to get accustomed to the light brightness produced by the light source module 200), the control module will speed up the duty cycle of the light modulation signal F (pulse-width modulation signal) so that the activation time speeds up (shortens or decreases). In this manner, the light source module 200 will output light that will reach, in relatively quicker time, the highest brightness.

However, in another preferred embodiment, the light modulation signal F may also be a DC voltage level signal that is provided to the driver module 400 so that the driver module 400 can generate according to the DC voltage level signal the driving voltage E with corresponding amplitudes to control the activation time of the light source module 200. If the user activates or turns on the illumination system 100 when the environment brightness is low (ex. night time or within a dark room), the environment brightness signal that the control module 500 receives will be lower than the default lowest brightness threshold. In this instance, the control module 500 will slow down the speed at which the voltage increases of the light modulation signal F (DC voltage level signal) such that the speed at which the driving voltage E raises to the operating voltage slows down. Conversely, when the user activates or turns on the illumination system 100 when the environment brightness is relatively high, the environment brightness signal will be higher than the default highest brightness threshold. In this instance, the control module 500 will speed up the speed at which the voltage increases of the light modulation signal F (DC voltage level signal) such that the speed at which the driving voltage E raises to the operating voltage speeds up.

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

## Claims

1. An illumination system, comprising:
a light source module;
a power module coupled to an input power source, wherein the power module converts and outputs a direct voltage from the input power source;
a driver module coupled between the light source module and the power module, wherein the driver module receives and converts the direct voltage from the power module into a driving voltage and outputs a driving current to drive the light source module;
a light sensor module for sensing an environment brightness and outputting an environment brightness signal; and
a control module coupled respectively to the power module, the light sensor module, and the driver module;
wherein the control module outputs a light modulation signal to the driver module after receiving the environment brightness signal, and the driver module controls an activation time of the light source module according to the light modulation signal.

2. The illumination system of claim 1, wherein the control module receives the direct voltage from the power module to activate the light sensor module to sense the environment brightness.

3. The illumination system of claim 2, wherein the activation time is the time required for the driving voltage to reach an operating voltage.

4. The illumination system of claim 3, wherein the light modulation signal is a pulse-width modulation signal, the driver module generates according to the pulse-width modulation signal the driving voltage having corresponding amplitude.

5. The illumination system of claim 4, wherein the control module slows down a duty cycle of the pulse-width modulation signal when the environment brightness signal is lower than a default lowest brightness threshold so that the activation time slows down, and the control module speeds up the duty cycle of the pulse-width modulation signal when the environment brightness signal is higher than a default highest brightness threshold so that the activation time speeds up.

6. The illumination system of claim 3, wherein the light modulation signal is a direct current voltage level signal to provide the driver module to generate according to the direct current voltage level signal the driving voltage having corresponding amplitude.

7. The illumination system of claim 6, wherein the control module slows down the speed of voltage increase of the direct current voltage level signal when the environment brightness signal is lower than a default lowest brightness threshold such that the speed at which the driving voltage increases to the operating voltage slows down, and the control module speeds up the speed of voltage increase of the direct current voltage level signal when the environment brightness signal is higher than a default highest brightness threshold such that the speed at which the driving voltage increases to the operating voltage speeds up.

8. The illumination system of claim 1, wherein the input power source is an alternating current source.

9. The illumination system of claim 1, wherein the light source is a light-emitting diode module.

10. The illumination system of claim 1, wherein the driver module is a direct current to current convertor.
